# EUROPÄISCHE PATENTSCHRIFT

(11) **EP 2 286 105 B1**
(45) Veröffentlichungstag und Bekanntmachung des Hinweises auf die Patenterteilung: **13.02.2013**
(21) Anmeldenummer: 09765435.4
(22) Anmeldetag: 08.06.2009
(51) Int. Cl.: F16D 25/10, F16F 15/14

(54) **DOPPELKUPPLUNG MIT DREHSCHWINGUNGSDÄMPFER**
DUAL CLUTCH WITH ROTARY VIBRATION DAMPER
DOUBLE EMBRAYAGE À AMORTISSEUR DE VIBRATIONS TORSIONNELLES

(30) Priorität: 16.06.2008 DE 102008028235; 28.07.2008 DE 102008035146; 09.03.2009 DE 102009011768
(43) Veröffentlichungstag der Anmeldung: 23.02.2011
(73) Patentinhaber: Schaeffler Technologies AG & Co. KG, 91074 Herzogenaurach (DE)
(72) Erfinder: AGNER, Ivo, 77815 Bühl (DE)
(86) Internationale Anmeldenummer: PCT/DE2009/000793
(87) Internationale Veröffentlichungsnummer: WO 2009/152799

(56) Entgegenhaltungen:
- EP-A- 1 744 074
- EP-A- 1 780 434
- EP-A- 1 865 222
- DE-A1- 10 034 730
- DE-A1- 10 224 874
- DE-A1- 19 804 227
- DE-A1-102004 004 176

## Beschreibung

Die Erfindung betrifft eine Doppelkupplung mit zwei in einem Nassraum angeordneten Nasskupplungen und einem Drehschwingungsdämpfer.

Doppelkupplungen sind für Kraftfahrzeuge bekannt, siehe z. B. das Dokument DE 100 34 730 A1. Diese können als Doppelkupplungen mit zwei radial übereinander geschachtelten Nasskupplungen ausgestaltet sein, die in einem geschlossenen Nassraum, der mit einem Fluid wie Hydrauliköl oder dergleichen befüllt ist, betrieben werden. Weiterhin können in dem Nassraum Drehschwingungsdämpfer zur Schwingungsdämpfung von Torsionsschwingungen, die insbesondere durch Brennkraftmaschinen wie drehmomentstarken Dieselmotoren in den Antriebsstrang eingeleitet werden, vorgesehen werden. Dabei müssen mit steigender Laufunruhe der Brennkraftmaschine die Drehschwingungsdämpfer wie beispielsweise Zweimassenschwungräder stärker dimensioniert werden, wodurch der axiale Bauraum der Doppelkupplung durch den axial benachbart zu den Nasskupplungen angeordneten Drehschwingungsdämpfer steigt. Insbesondere bei der Verwendung mehrerer, radial übereinander angeordneter Dämpfungssysteme tritt das radial innere Dämpfungssystem in Bauraumkonflikt mit den auf diesem Umfang axial ausgedehnten Nasskupplungen.

Aufgabe der Erfindung ist daher, eine Doppelkupplung vorzuschlagen, die weniger axialen Bauraum benötigt. Insbesondere soll die Doppelkupplung durch eine gemeinsame Nutzung von Bauteilen der Nasskupplungen und des Drehschwingungsdämpfers kompakt ausgestaltet werden.

Die Erfindung wird durch eine Doppelkupplung für Kraftfahrzeuge mit den folgenden Merkmalen gelöst:
- die Doppelkupplung weist ein öldichtes Gehäuse auf;
- das Gehäuse ist mit der Kurbelwelle einer Brennkraftmaschine drehfest verbunden;
- in dem Gehäuse sind mindestens ein Drehschwingungsdämpfer, zwei Nasskupplungen und ein Fliehkraftpendel angeordnet;
- die Nasskupplungen weisen je ein Eingangsteil und je ein Ausgangsteil auf;
- die Eingangsteile der Nasskupplungen sind miteinander verbunden;
- die Ausgangsteile der Nasskupplungen sind mit Getriebeeingangswellen verbunden;
- im Kraftfluss von dem Gehäuse zu den Eingangsteilen der Nasskupplungen ist ein Drehschwingungsdämpfer angeordnet, wobei das Eingangsteil dieses Dämpfers mit dem Gehäuse und das Ausgangsteil des Drehschwingungsdämpfers mit den Eingangsteilen der Nasskupplungen verbunden ist;
- an einem der Eingangsteile der Nasskupplungen ist das Fliehkraftpendel angeordnet.

Nach dem erfinderischen Gedanken wird der Drehschwingungsdämpfer in die Nasskupplung so integriert, dass axial Bauraum erfordernde Bauteile der Nasskupplungen und des Drehschwingungsdämpfers gemeinsam genutzt werden. So können Eingangsteil einer oder beider Nasskupplungen und das Ausgangsteil soweit gemeinsam genutzt werden, so dass das Ausgangsteil des Drehschwingungsdämpfers keinen zusätzlichen axialen Bauraum erfordert. Alternativ oder zusätzlich kann ein äußeres Dämpfungssystem radial außerhalb der Nasskupplungen angeordnet werden, so dass lediglich das Eingangsteil des Drehschwingungsdämpfers zusätzlichen axialen Bauraum erfordert. In besonders vorteilhafter Weise kann dieses Eingangsteil gleichzeitig eine Gehäusewand des Gehäuses bilden. Soweit ein zweistufiger Drehschwingungsdämpfer mit einem inneren oder äußeren Dämpfungssystem erforderlich ist, kann eines der Dämpfungssysteme durch ein Fliehkraftpendel ersetzt werden, das axial schmaler baut als eine Dämpferstufe mit axial ausladenden Energiespeichern mit Schraubenfedern.

In vorteilhafter Weise wird der Drehschwingungsdämpfer und das Fliehkraftpendel im Wesentlichen auf gleichem Durchmesser und axial hintereinander angeordnet. Hierdurch kann insbesondere durch das parallel zu dem Drehschwingungsdämpfer anordenbare Fliehkraftpendel eine besonders günstige axial schmale Doppelkupplung vorgeschlagen werden, die im Wesentlichen durch den axialen Bauraum der beiden Nasskupplungen vorgegeben wird. Die Anordnung der Nasskupplungen radial innerhalb des Drehschwingungsdämpfers und des Fliehkraftpendels erzwingt bei vorgegebenem radialem Bauraum eine Anordnung der Reibbeläge auf einem geringeren Durchmesser. Eine dadurch bedingte Abnahme eines maximal über die Nasskupplungen übertragbaren Moments kann durch eine - verglichen mit dem axialen Bauraumgewinn der Anordnung des Drehschwingungsdämpfers radial außerhalb der Nasskupplung - Einfügung einer axial schmalen Reiblamelle in die Reibungskupplungen mehr als ausgeglichen werden.

Der Drehschwingungsdämpfer kann als Zweimassenschwungrad mit einer dem Eingangsteil zugeordneten Primär- und einer dem Ausgangsteil zugeordneten Sekundärmasse ausgestaltet sein, wobei zwischen Ein- und Ausgangsteile sich über einen weiten Umfang des Drehschwingungsdämpfers erstreckenden Bogenfedern angeordnet sein können. Zum Schutz der ungehärteten Außenschale des Gehäuses gegen Verschleiß durch die sich infolge Fliehkraft abstützenden Bogenfedern kann zwischen diesen und dem Gehäuse eine gehärtete Gleitschale angeordnet sein, in denen die Bogenfedern von dem im Gehäuse enthaltenen Fluid geschmiert gleiten.

Nach einem erfinderischen Gedanken kann das Gehäuse mit einem Verbindungselement versehen sein, welches eine Ölförderpumpe in einem axial nachfolgenden Getriebe antreibt. Eine derartige Ölförderpumpe kann gegebenenfalls mit einem Druckspeicher kombiniert, die Beschaltung der Nasskupplungen, die Getriebeschaltung, eine Umwälzung des Fluidvolumens des Gehäuses und/oder dergleichen bewirken.

In einer vorteilhaften Ausführung kann eine Umwälzung ohne Pumpe erfolgen, indem ein Schöpfrohr innerhalb des Gehäuses radial außen angeordnet wird und im Gehäuse enthaltenes, erwärmtes Fluid einem außerhalb des Gehäuses angeordneten Kühlkreislauf, der einen Kühler enthalten kann, zuführt. Das durch Fliehkraft nach außen geförderte Fluid wie Hydrauliköl oder dergleichen wird nach Kühlung radial innen wieder in das Gehäuse eingeleitet.

Die Betätigung der Nasskupplungen kann hydraulisch mittels von einer Druckkammer betätigten, das heißt axial verlagerten Kolben, die jeweils ein Lamellenpaket einer Nasskupplung gehäusefest verpressen und dadurch einen Reibeingriff zwischen Eingangs- und Ausgangsteil der Nasskupplung bilden, erfolgen, wobei die Druckkammer von einer Pumpe nach dem Beschalten von von einem Steuergerät geregelten Hydraulikventilen mit Druck durch ein vorgespanntes Druckmittel beaufschlagt wird. Alternativ können die Kolben oder entsprechende Betätigungsbauteile mechanisch über Hebeleinrichtungen betätigt werden, die von bevorzugt außerhalb des Gehäuses angeordneten Aktoren wie von einem Steuergerät gesteuerten Elektromotoren betätigt werden.

Das Fliehkraftpendel kann auf den Einsatz in dem Gehäuse unter dem Einfluss des Fluids abgestimmt sein. In vorteilhafter Weise ist das Schwingungsverhalten des Fliehkraftpendels hierzu auf eine Ordnung der Brennkraftmaschine ausgelegt. Beispielsweise ist das Fliehkraftpendel bei einer Brennkraftmaschine nach dem Viertakt-Prinzip mit vier Zylindern auf eine Ordnung größer 2 - vorzugsweise 2,05 bis 2,2 - ausgelegt. Entsprechend kann die Ordnung des Fliehkraftpendels bei Verwendung einer Brennkraftmaschine mit zwei Zylindern auf eine Ordnung größer 1 - vorzugsweise zwischen 1, 02 und 1,20 -, bei einer Brennkraftmaschine mit drei Zylindern auf eine Ordnung größer 1, 5 -vorzugsweise zwischen 1, 52 und 1,7 -, bei einer Brennkraftmaschine mit sechs Zylinder größer 3 - vorzugsweise zwischen 3,02 und 3,2 - und bei einer Brennkraftmaschine mit acht Zylindern größer 4 - vorzugsweise zwischen 4,02 und 4,2 ausgelegt werden.

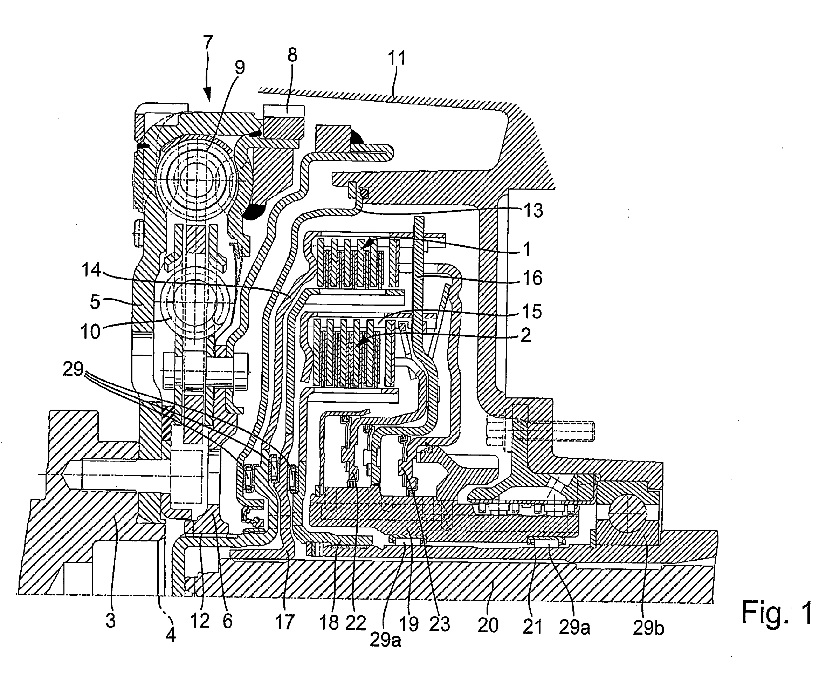

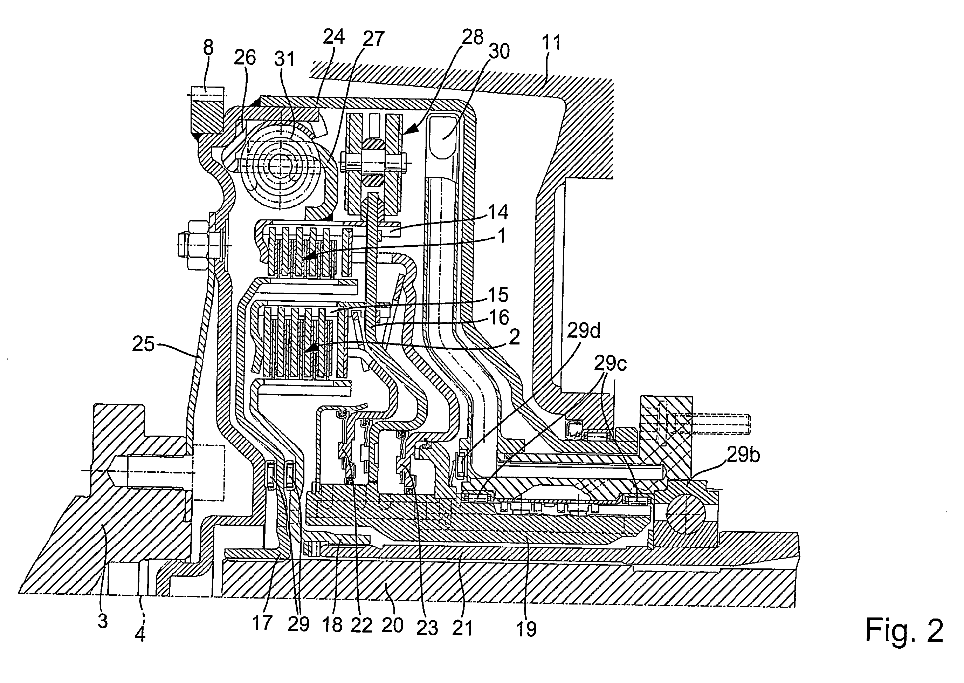

Die Erfindung wird anhand der Figuren 1 und 2 näher erläutert. Dabei zeigen:
- Figur 1: eine Doppelkupplung mit einem zweistufigen Drehschwingungsdämpfer nach dem Stand der Technik
- und Figur 2: eine erfindungsgemäße Doppelkupplung mit einem radial außerhalb der Nasskupplungen angeordneten, axial benachbart zu einem Fliehkraftpendel angeordneten Drehschwingungsdämpfer.

Figur 1 zeigt eine Doppelkupplung mit zwei radial übereinander angeordneten Nasskupplungen 1, 2 und einen auf einer um eine Drehachse 4 drehenden Kurbelwelle 3 drehfest aufgenommenen Drehschwingungsdämpfer 7, der als Zweimassenschwungrad mit einem mit der Kurbelwelle 3 fest verbundenen Primärteil 5 und einem Sekundärteil 6 gebildet ist. Das Sekundärteil 6 enthält einen Anlasserzahnkranz 8 zum Starten der nicht näher dargestellten Brennkraftmaschine. Der trocken betriebene, außerhalb einer Trennwand 13 zu den Nasskupplungen 1, 2 angeordnete Drehschwingungsdämpfer 7 ist zweistufig aufgebaut und enthält zwei seriell geschaltete Dämpferstufen, die aus dem radial äußeren Dämpfungssystem 9 und dem inneren Dämpfungssystem 10 gebildet sind.

Die Trennwand 13 bildet mit dem Getriebegehäuse 11 einen Nassraum für die Nasskupplungen 1,2. Das Ausgangsteil wie Sekundärteil 5 des Zweimassenschwungrads ist mit dem Eingangsteil 14 der Nasskupplungen 1, 2 mittels der an einer Nabe des Eingangsteils 15 eingebrachten Verzahnung 12 drehschlüssig verbunden. Die Nabe ist weiterhin gegenüber der Trennwand 13 axial beabstandet zur Verzahnung 4 mittels eines Radialwellendichtrings abgedichtet. Das Eingangsteil 14 der Nasskupplung 1 ist mit dem Eingangsteil 15 der Nasskupplung 2 mittels des Verbindungsstücks 16 verbunden.

Die Ausgangsteile 17, 18 der Nasskupplungen 1, 2 sind axial benachbart zueinander und zur Trennwand 13 angeordnet und stützen sich axial aufeinander verdrehbar mittels der Lager 29 wie Nadellager ab. Die Ausgangsteile sind jeweils mit einer Getriebeeingangswelle 20, 21 drehfest verbunden, beispielsweise verzahnt. Die axial durch Druck beaufschlagbaren Kolben 22, 23 sind auf der Pumpennabe 19 axial verlagerbar aufgenommen. Die Pumpennabe 19 weist zur Druckversorgung der Druckkammern zur axialen Verlagerung der Kolben 22, 23 entsprechende Druckzuführungsleitungen auf.

In dem gezeigten Ausführungsbeispiel der Figur 1 ist die Doppelkupplung mittels der Lager 29a auf der Getriebeeingangswelle 21 verdrehbar gelagert. Als axialer Anschlag dient das Lager 29b, das als Festlager die Getriebeeingangswelle 21 am Getriebegehäuse 11 lagert.

Figur 2 zeigt die erfindungsgemäße Anordnung einer Doppelkupplung mit in das Gehäuse 24 und damit in den Nassraum integriertem Drehschwingungsdämpfer 31, der in dem gezeigten Ausführungsbeispiel einstufig und in weiteren Ausführungsbeispielen auch mehrstufig ausgebildet sein kann und der axial beabstandet zu dem im Wesentlichen auf gleicher radialer Höhe radial außerhalb der Nasskupplungen 1, 2 angeordneten Fliehkraftpendel 28 angeordnet ist. Dabei sind Drehschwingungsdämpfer 31 und Fliehkraftpendel 28 im Wesentlichen innerhalb des axialen Bauraums der Nasskupplungen 1, 2 angeordnet, so dass durch die Kombination des Drehschwingungsdämpfers 31 und des Fliehkraftpendels 28 eine Schwingungsdämpfung vorgeschlagen werden kann, die quasi keinen zusätzlichen axialen Bauraum benötigt. In bevorzugter Weise ist - wie in dem gezeigten Ausführungsbeispiel dargestellt - der Drehschwingungsdämpfer 31 parallel zum Fliehkraftpendel 28 beschaltet, wodurch beide Schwingungsdämpfungsbauteile gleichzeitig auf die Eingangsteile 14, 15 der Nasskupplungen 1, 2 einwirken, so dass beispielsweise der einen weiten Schwingungswinkel abdeckende Drehschwingungsdämpfer 31 große Amplituden abdecken kann, während das Fliehkraftpendel 28 kleinere Amplituden mit gegebenenfalls höherer Frequenz dämpft.

Der Drehschwingungsdämpfer 31 ist direkt zwischen dem den Anlasserzahnkranz 8 tragenden Gehäuse 24 und dem Eingangsteil 14 der Nasskupplung 1 verbunden, wobei das Eingangsteil 26 des Drehschwingungsdämpfers 31 mit dem Gehäuse 24 fest verbunden, beispielsweise verschweißt ist und die Energiespeicher wie Bogenfedern einseitig beaufschlagt, während das Ausgangsteil 27 des Drehschwingungsdämpfers 31 die andere Seite der Energiespeicher beaufschlagt und mit dem Eingangsteil 14 fest verbunden, beispielsweise verschweißt ist.

Das Fliehkraftpendel 32 ist am Außenumfang des Verbindungsstücks 16, das die beiden Eingangsteile 14, 15 der Nasskupplungen 1, 2 miteinander verbindet, aufgenommen und weist an beiden Seiten entsprechend den auftretenden Schwingungen Schwungmassen auf, die in in Umfangsrichtung und radiale Richtung verlaufenden, im Verbindungsstück 16 vorgesehenen Laufbahnen gegenüber dem Verbindungsstück verlagerbar sind, wobei Richtung und Länge der Laufbahnen in Verbindung mit den verwendeten Schwungmassen an die zu dämpfende Frequenz beziehungsweise an den entsprechenden Frequenzbereich angepasst sind. Dabei wird das Fliehkraftpendel 28 an das im Gehäuse verwendete Fluid angepasst. Es hat sich als vorteilhaft erwiesen, wenn das Fliehkraftpendel 28 auf die Dämpfung von Schwingungen zweiter und höherer Ordnung abhängig von der Ordnung der Brennkraftmaschine mit einer vorzugsweisen Erhöhung der Toleranzen der Ordnungen mit einer unteren Toleranzgrenze von 0,02 und einer oberen Toleranzgrenze von 0,2 ausgelegt ist.

Durch die Integration des Drehschwingungsdämpfers 31 in das Gehäuse 24 wird dieses direkt mittels einer axial elastischen Flexplate 25 an die um die Drehachse 4 drehende Kurbelwelle 3 drehfest angebunden. Die Ausgestaltung des Gehäuses 24 mit der Flexplate 25 entspricht der Einbausituation eines hydrodynamischen Drehmomentwandlers. Entsprechend wird die Doppelkupplung zur Montage auf die Getriebeeingangswelle geschoben und bei der Verbindung von Getriebe und Brennkraftmaschine die an der Kurbelwelle 3 montierte Flexplate 25 mit dem Gehäuse 24 verschraubt.

Zur zwangsweisen Umwälzung des in dem Gehäuse 24 zur Kühlung der Nasskupplungen 1, 2 vorgesehenen Fluids, das insbesondere durch Schlupf der Nasskupplungen 1, 2 erwärmt wird, kann ein feststehendes Schöpfrohr 30 axial beabstandet zum Fliehkraftpendel 28 vorgesehen sein, das im Bereich des Außenumfangs des Gehäuses 24 eine Öffnung aufweist, das das durch die Rotation des Gehäuses 24 rotierende Fluid abschöpft und mittels einer Leitung das Fluid aus dem Gehäuse 24 beispielsweise in den Getriebesumpf leitet. Vom Getriebesumpf wird das Fluid zur Betätigung der Nasskupplungen 1, 2 mittels einer Pumpe den zugehörigen Aktoren zugeführt. Bevor das Fluid zur Kühlung der Nasskupplungen 1, 2 eingesetzt wird, kann es durch einen Kühler geleitet und gekühlt werden.

Je nach radialer Länge des Schöpfrohrs 30 kann das Fliehkraftpendel 28 vorzugsweise trocken oder nass betrieben werden. Im gezeigten Ausführungsbeispiel erstreckt sich das Schöpfrohr 30 bis zum Außenumfang des Gehäuses 24 und schöpft das sich im Bereich des Fliehkraftpendels 28 unter Fliehkrafteinwirkung sammelnde Fluid ab, wodurch das Fliehkraftpendel 28 trocken fällt. Das Fliehkraftpendel wird dabei auf den trockenen Betrieb ausgelegt. Bei radialer Verkürzung des Schöpfrohrs sammelt sich das Fluid im Bereich des Fliehkraftpendels und eine - wie oben beschriebene - nasse Auslegung wird gewählt. Nach Durchlauf des Kühlkreislaufs wird das Fluid radial innen dem Gehäuse wieder zugeführt. Zur Einsparung axialen Bauraums kann das Schöpfrohr 30 weggelassen und das Fluid mittels einer Umwälzpumpe in den Kühlkreislauf transportiert werden.

Die Betätigung der Nasskupplungen 1, 2 erfolgt wie unter Figur 1 erläutert mittels der auf der Pumpennabe 19 dichtend und axial abhängig vom Betätigungsdruck verlagerbar angeordneten Kolben 22, 23. Die Ausleitung des von den geschlossenen oder schlupfenden Nasskupplungen 1, 2 übertragenen Moments erfolgt mittels der mit den Getriebeeingangswellen 20, 21 drehfest verbundenen Ausgangsteilen 17, 18 der Nasskupplungen 1, 2.

Die verdrehbare Lagerung der Ausgangsteile 17, 18 aufeinander und gegenüber dem Gehäuse 24, der Getriebeeingangswelle 21 am Getriebegehäuse 11 und des Schöpfrohrs 30 auf der Pumpennabe 19 erfolgt mittels der Lager 29.

In an sich aus Drehmomentwandlern bekannter Art und Weise weist das Gehäuse 24 ein aus dem Getriebegehäuse 11 auskragendes Verbindungselement 32 auf, das mittels einer Verzahnung eine Pumpe antreiben kann, die beispielsweise gegebenenfalls unter Zuschaltung eines Druckspeichers die Nasskupplungen 1, 2, Aktoren wie Schaltzylinder des Getriebes wie Doppelkupplungsgetriebes betätigen und/oder im Falle des Weglassens des Schöpfrohrs 30 die Umwälzung des Fluids im Gehäuse bewirken kann. Die Pumpe kann dabei in dem nachfolgenden Getriebe, in das das Verbindungselement 32 eingreift, angeordnet sein und beispielsweise als Zahnradpumpe oder Radialkolbenpumpe ausgebildet sein.

Die Doppelkupplung der Figur 2 ist mittels der Lager 29c auf dem Getriebegehäuse 11 gelagert. Der axiale Anschlag der Doppelkupplung erfolgt mittels des Lagers 29d.

### Bezugszeichenliste

- 1: Nasskupplung
- 2: Nasskupplung
- 3: Kurbelwelle
- 4: Drehachse
- 5: Primärteil
- 6: Sekundärteil
- 7: Drehschwingungsdämpfer
- 8: Anlasserzahnkranz
- 9: äußeres Dämpfungssystem
- 10: inneres Dämpfungssystem
- 11: Getriebegehäuse
- 12: Verzahnung
- 13: Trennwand
- 14: Eingangsteil einer Nasskupplung
- 15: Eingangsteil einer Nasskupplung
- 16: Verbindungsstück
- 17: Ausgangsteil einer Nasskupplung
- 18: Ausgangsteil einer Nasskupplung
- 19: Pumpennabe
- 20: Getriebeeingangswelle
- 21: Getriebeeingangswelle
- 22: Kolben
- 23: Kolben
- 24: Gehäuse
- 25: Flexplate
- 26: Eingangsteil
- 27: Ausgangsteil
- 28: Fliehkraftpendel
- 29: Lager
- 29a: Lager
- 29b: Lager
- 29c: Lager
- 29d: Lager
- 30: Schöpfrohr
- 31: Drehschwingungsdämpfer
- 32: Verbindungselement

## Patentansprüche

1. Doppelkupplung für Kraftfahrzeuge mit den folgenden Merkmalen:
- die Doppelkupplung weist ein öldichtes Gehäuse (24) auf;
- das Gehäuse (24) ist mit der Kurbelwelle (3) einer Brennkraftmaschine drehfest verbunden;
- in dem Gehäuse (24) sind mindestens ein Drehschwingungsdämpfer (31), zwei Nasskupplungen (1, 2) und ein Fliehkraftpendel (28) angeordnet;
- die Nasskupplungen (1, 2) weisen je ein Eingangsteil (14, 15) und je ein Ausgangsteil (17, 18) auf;
- die Eingangsteile (14, 15) der Nasskupplungen (1, 2) sind miteinander verbunden;
- die Ausgangsteile (17, 18) der Nasskupplungen (1, 2) sind mit Getriebeeingangswellen (20, 21) drehfest verbunden;
- im Kraftfluss von dem Gehäuse (24) zu den Eingangsteilen (14, 15) der Nasskupplungen (1, 2) ist ein Dämpfer (31) angeordnet, wobei das Eingangsteil (26) dieses Drehschwingungsdämpfers (31) mit dem Gehäuse (24) und das Ausgangsteil (27) des Dämpfers (31) mit den Eingangsteilen (14, 15) der Nasskupplungen (1, 2) verbunden ist;
- an einem der Eingangsteile (14, 15) der Nasskupplungen (1, 2) ist das Fliehkraftpendel (28) angeordnet.

2. Doppelkupplung nach Anspruch 1, **dadurch gekennzeichnet, dass** der Drehschwingungsdämpfer (31) und das Fliehkraftpendel (28) im Wesentlichen auf gleichem Durchmesser und axial hintereinander angeordnet sind.

3. Doppelkupplung nach Anspruch 1 oder 2, **dadurch gekennzeichnet, dass** der Drehschwingungsdämpfer (31) mit Bogenfedern ausgerüstet ist.

4. Doppelkupplung nach Anspruch 3, **dadurch gekennzeichnet, dass** die Bogenfedern in einer Gleitschale gleiten.

5. Doppelkupplung nach einem der Ansprüche 1 bis 4, **dadurch gekennzeichnet, dass** das Gehäuse (24) mit einem Verbindungselement (32) versehen ist, welches eine Pumpe in einem axial nachfolgenden Getriebe antreibt.

6. Doppelkupplung nach einem der Ansprüche 1 bis 5, **dadurch gekennzeichnet, dass** in dem Gehäuse (24) mindestens ein Schöpfrohr (30) angeordnet ist, welches das radial äußere, im Gehäuse (24) vorhandene Fluid aus dem Gehäuse (24) fördert.

7. Doppelkupplung nach Anspruch 6, **dadurch gekennzeichnet, dass** das Fluid in einem radialen Bereich des Fliehkraftpendels (28) abgeschöpft wird.

8. Doppelkupplung nach Anspruch 6, **dadurch gekennzeichnet, dass** das Fluid radial innerhalb des Fliehkraftpendels (28) abgeschöpft wird.

9. Doppelkupplung nach Anspruch 8, **dadurch gekennzeichnet, dass** das Fliehkraftpendel (28) auf eine Ordnung größer einer Ordnung einer das Fliehkrafpendel antreibenden Brennkraftmaschine - vorzugsweise um 0,02 bis 0,2 höherer Ordnung als die Ordnung der Brennkraftmaschine - ausgelegt ist.

10. Doppelkupplung nach einem der Ansprüche 1 bis 5, **dadurch gekennzeichnet, dass** der Fluidaustausch in dem Gehäuse (24) mittels einer Pumpe bewerkstelligt wird.

11. Doppelkupplung nach einem der Ansprüche 1 bis 10, **dadurch gekennzeichnet, dass** mindestens eine Nasskupplung (1, 2) mittels Kolben (22, 23) geschlossen wird.

12. Doppelkupplung nach einem der Ansprüche 1 bis 10, **dadurch gekennzeichnet, dass** mindestens eine Nasskupplung (1, 2) mittels einer Hebelbetätigung geschlossen wird.

## Claims

1. Dual clutch for motor vehicles having the following features:
- the dual clutch has an oiltight housing (24);
- the housing (24) is connected in a rotationally fixed manner to the crankshaft (3) of an internal combustion engine;
- at least one torsional vibration damper (31), two wet clutches (1, 2) and a centrifugal pendulum (28) are arranged in the housing (24);
- the wet clutches (1, 2) each have an input part (14, 15) and an output part (17, 18);
- the input parts (14, 15) of the wet clutches (1, 2) are connected to one another;
- the output parts (17, 18) of the wet clutches (1, 2) are connected in a rotationally fixed manner to transmission input shafts (20, 21);
- a damper (31) is arranged in the power flow from the housing (24) to the input parts (14, 15) of the wet clutches (1, 2), the input part (26) of said torsional vibration damper (31) being connected to the housing (24), and the output part (27) of the damper (31) being connected to the input parts (14, 15) of the wet clutches (1, 2);
- the centrifugal pendulum (28) is arranged on one of the input parts (14, 15) of the wet clutches (1, 2).

2. Dual clutch according to Claim 1, **characterized in that** the torsional vibration damper (31) and the centrifugal pendulum (28) are arranged substantially on the same diameter and axially in series.

3. Dual clutch according to Claim 1 or 2, **characterized in that** the torsional vibration damper (31) is fitted with arcuate springs.

4. Dual clutch according to Claim 3, **characterized in that** the arcuate springs slide in a sliding shell.

5. Dual clutch according to one of Claims 1 to 4, **characterized in that** the housing (24) is provided with a connecting element (32) which drives a pump in a transmission arranged axially in series.

6. Dual clutch according to one of Claims 1 to 5, **characterized in that** at least one scoop tube (30), which conveys the radially outer fluid present in the housing (24) out of the housing (24), is arranged in the housing (24).

7. Dual clutch according to Claim 6, **characterized in that** the fluid is scooped up in a radial region of the centrifugal pendulum (28).

8. Dual clutch according to Claim 6, **characterized in that** the fluid is scooped up radially within the centrifugal pendulum (28).

9. Dual clutch according to Claim 8, **characterized in that** the centrifugal pendulum (28) is designed for an order greater than an order of an internal combustion engine driving the centrifugal pendulum - preferably an order which is 0.02 to 0.2 times higher than the order of the internal combustion engine.

10. Dual clutch according to one of Claims 1 to 5, **characterized in that** the fluid exchange in the housing (24) is accomplished by means of a pump.

11. Dual clutch according to one of Claims 1 to 10, **characterized in that** at least one wet clutch (1, 2) is closed by means of pistons (22, 23).

12. Dual clutch according to one of Claims 1 to 10, **characterized in that** at least one wet clutch (1, 2) is closed by means of a lever actuation mechanism.

## Revendications

1. Double embrayage pour véhicules automobiles, comprenant les caractéristiques suivantes :
- le double embrayage présente un boîtier (24) étanche à l'huile ;
- le boîtier (24) est connecté de manière solidaire en rotation au vilebrequin (3) d'un moteur à combustion interne ;
- dans le boîtier (24) sont disposés au moins un amortisseur de vibrations torsionnelles (31), deux embrayages humides (1, 2) et un pendule à force centrifuge (28) ;
- les embrayages humides (1, 2) présentent chacun une partie d'entrée (14, 15) et une partie de sortie (17, 18) ;
- les parties d'entrée (14, 15) des embrayages humides (1, 2) sont connectées l'une à l'autre
- les parties de sortie (17, 18) des embrayages humides (1, 2) sont connectées de manière solidaire en rotation à des arbres d'entrée de boîte de vitesses (20, 21) ;
- un amortisseur (31) est disposé dans le flux de force depuis le boîtier (24) jusqu'aux parties d'entrée (14, 15) des embrayages humides (1, 2), la partie d'entrée (26) de cet amortisseur de vibrations torsionnelles (31) étant connectée au boîtier (24) et la partie de sortie (27) de l'amortisseur (31) étant connectée aux parties d'entrée (14, 15) des embrayages humides (1, 2) ;
- le pendule à force centrifuge (28) est disposé sur l'une des parties d'entrée (14, 15) des embrayages humides (1, 2).

2. Double embrayage selon la revendication 1, **caractérisé en ce que** l'amortisseur de vibrations torsionnelles (31) et le pendule à force centrifuge (28) sont disposés essentiellement sur le même diamètre et axialement l'un derrière l'autre.

3. Double embrayage selon la revendication 1 ou 2, **caractérisé en ce que** l'amortisseur de vibrations torsionnelles (31) est muni de ressorts arqués.

4. Double embrayage selon la revendication 3, **caractérisé en ce que** les ressorts arqués glissent dans une coque de glissement.

5. Double embrayage selon l'une quelconque des revendications 1 à 4, **caractérisé en ce que** le boîtier (24) est muni d'un élément de connexion (32) qui entraîne une pompe dans une transmission disposée axialement en aval.

6. Double embrayage selon l'une quelconque des revendications 1 à 5, **caractérisé en ce qu'**au moins un tube de prélèvement (30) est disposé dans le boîtier (24), lequel transporte hors du boîtier (24) le fluide situé radialement à l'extérieur dans le boitier (24).

7. Double embrayage selon la revendication 6, **caractérisé en ce que** le fluide est prélevé dans une région radiale du pendule à force centrifuge (28).

8. Double embrayage selon la revendication 6, **caractérisé en ce que** le fluide est prélevé radialement à l'intérieur du pendule à force centrifuge (28).

9. Double embrayage selon la revendication 8, **caractérisé en ce que** le pendule à force centrifuge (28) est conçu avec un ordre supérieur à un ordre d'un moteur à combustion interne entraînant le pendule à force centrifuge, de préférence avec un ordre supérieur de 0,02 à 0,2 à l'ordre du moteur à combustion interne.

10. Double embrayage selon l'une quelconque des revendications 1 à 5, **caractérisé en ce que** l'échange de fluide dans le boîtier (24) est mis en oeuvre au moyen d'une pompe.

11. Double embrayage selon l'une quelconque des revendications 1 à 10, **caractérisé en ce qu'**au moins un embrayage humide (1, 2) est fermé au moyen de pistons (22, 23).

12. Double embrayage selon l'une quelconque des revendications 1 à 10, **caractérisé en ce qu'**au moins un embrayage humide (1, 2) est fermé au moyen d'un actionnement à levier.
